Europäisches Patentamt

European Patent Office

Office européen des brevets

(19)

(11) Veröffentlichungsnummer: **0 056 242
B1**

(12) **EUROPÄISCHE PATENTSCHRIFT**

(45) Veröffentlichungstag der Patentschrift:
08.08.84

(51) Int. Cl.³: **C 08 F 285/00, C 08 F 265/04**

(21) Anmeldenummer: **82100041.1**

(22) Anmeldetag: **07.01.82**

(54) Kautschukpulver.

(30) Priorität: **13.01.81 DE 3100748**

(43) Veröffentlichungstag der Anmeldung:
**21.07.82 Patentblatt 82/29**

(45) Bekanntmachung des Hinweises auf die Patenterteilung:
**08.08.84 Patentblatt 84/32**

(84) Benannte Vertragsstaaten:
**DE FR GB IT NL**

(56) Entgegenhaltungen:
**FR - A - 2 069 007
FR - A - 2 090 558
FR - A - 2 319 655
US - A - 3 787 522
US - A - 4 141 932**

(73) Patentinhaber: **BAYER AG, Konzernverwaltung RP
Patentabteilung, D-5090 Leverkusen 1 Bayerwerk (DE)**

(72) Erfinder: **Lindner, Christian, Dr., Riehler Strasse 200,
D-5000 Koeln 60 (DE)**
Erfinder: **Ott, Karl-Heinz, Dr., Paul-Klee-Strasse 54,
D-5090 Leverkusen (DE)**

# 0 056 242

## Beschreibung

Die Erfindung betrifft rieselfähige Kautschukpulver und ein Verfahren zu ihrer Herstellung.

Kautschukpulver müssen rieselfähig sein, damit eine problemlose Einarbeitung, Compoundierung, Verarbeitung, Lagerung und Handhabbarkeit der Polymerisate gewährleistet ist. Beispielsweise werden synthetische Kautschuke, die zum Aneinanderkleben neigen, mit Talkum, $TiO_2$ oder $SiO_2$ bepudert bzw. beschichtet. Diese Hilfsstoffe können sich aber nachteilig auf die Eigenschaften der Polymerisate auswirken.

In der DE-OS 2 801 817 wird ein Verfahren beschrieben, elastische Pfropfkautschuke in ihrer Handhabbarkeit zu verbessern, indem man ein Vinylpolymerisat an der Oberfläche der Kautschukteilchen koaguliert; diese sind selbst auch im koagulierten Zustand, jedoch nicht vom Koagulationsmedium abgetrennt. Dieses Verfahren erfordert eine gesonderte Polymerisationsstufe für das Vinylpolymerisat; außerdem verändert das ungepfropfte Vinylpolymerisat die Eigenschaften des Pfropfkautschuks.

In der europäischen Patentschrift 0 009 250 wird ein abgewandeltes Verfahren beschrieben; dabei wird zusätzlich zu dem Vinylpolymeren ein organisches Lösungsmittel eingesetzt. Dieses Verfahren hat die gleichen Nachteile, zudem muß das Lösungsmittel wieder entfernt werden. Wendet man die bekannten Methoden auf ungepfropfte Kautschuke an, so entstehen fast immer Polymerisatmischungen mit ungünstigeren Stoffeigenschaften.

Aus der DDR-Patentschrift 86 500 war weiter bekannt, einen Restmonomere enthaltenden Kautschuklatex zu koagulieren und anschließend die verbliebenden (in diesem Fall unerwünschten) Restmonomere durch Polymerisation zu entfernen. Rieselfähiges Kautschukpulver erhält man so nicht, weil die polymerisierten Restmonomeren zu einem mit dem Kautschuk identischen Polymerisat führen.

Aus der DE-OS 2 843 068 war bekannt, in Gegenwart einer Suspension eines ABS-Pfropfcopolymerisats weitere Mengen der Monomeren zu polymerisieren, die bereits die Pfropfhülle bilden.

Gegenstand der Erfindung ist ein Verfahren zur Herstellung von rieselfähigen Kautschukpulvern mit Teilchen eines mittleren Durchmessers von 0,01 mm bis 10 mm, das dadurch gekennzeichnet ist, daß man einen Latex eines Kautschuks, dessen Latexpartikel aus einem Kernpolymerisat und einem Schalenpolymerisat aufgebaut sind, wobei sich Kern und Schale in ihrem chemischen Aufbau voneinander unterscheiden, und wobei wenigstens das Schalenpolymerisat ein Dien- oder Acrylatkautschuk mit Glasübergangstemperaturen unter 0°C bedeutet, unter Ausbildung einer wäßrigen Aufschlämmung des Kautschuks vollständig bricht, danach 2—20 Gew.-%, bezogen auf den Kautschuk, eines oder mehrerer Vinylmonomerer, die Polymerisate mit Glasübergangstemperaturen über 25°C bilden, in die Aufschlämmung einbringt und das oder die Monomeren, gegebenenfalls nach Zugabe eines radikalbildenden Katalysators polymerisiert.

Ein weiterer Gegenstand der Erfindung sind rieselfähige Kautschukpulver aus Teilchen mit einem mittleren Durchmesser von 0,01 mm bis 10 mm, bevorzugt 0,05 mm bis 8 mm, insbesondere bevorzugt 0,1 mm bis 4 mm, die eine aufpolymerisierte Hülle aus dem Polymerisat oder Copolymerisat eines oder mehrerer Vinylmonomerer, die Polymerisate mit Glasübergangstemperaturen über 25°C bilden, in einer Menge von 2 bis 20 Gew.-%, bezogen auf den Kautschuk, enthalten, die dadurch gekennzeichnet sind, daß der Kautschuk ein Latexpolymerisat darstellt, dessen Latexpartikel aus einem Kernpolymerisat und einem Schalenpolymerisat aufgebaut sind, wobei sich Kern und Schale in ihrem chemischen Aufbau unterscheiden und wobei wenigstens das Schalenpolymerisat ein Dien- oder Acrylatkautschuk mit Glasübergangstemperaturen unter 0°C bedeutet.

Erfindungsgemäß sind alle Kautschuke geeignet, die sich von Dienen oder Acrylaten ableiten, die als wäßrige Emulsion (Latex) anfallen und deren Latexpartikel eine sogenannte Kern/Schalen-Morphologie aufweisen, d. h., die Latexpartikel der sich von Dienen oder Acrylaten ableitenden Kautschuke besitzen einen inneren Kern, der sich in seiner chemischen bzw. polymerphysikalischen Struktur (Aufbau) von der ihn umgebenden Schale unterscheidet, wobei wenigstens das Schalenpolymerisat einen Kautschuk darstellt, der sich von Dienen oder Acrylaten ableitet. Das Schalen- und Kernpolymerisat kann dabei unabhängig voneinander unvernetzt, teilvernetzt bzw. hochvernetzt vorliegen.

Als Schalen- und/oder Kernpolymerisat besonders geeignet sind Butadien-(Co)-Polymerisate (mit z. B. Monomeren wie Styrol, Acrylnitril, Vinylethern, Acrylsäureestern, Methacrylsäureester), sowie aliphatische Acrylsäureester-(Co)-Polymerisate (Acrylatkautschuke).

Als Acrylatkautschuke im Sinne der Erfindung werden Polymerisate bzw. Copolymerisate aus $C_1—C_{12}$-Alkylacrylaten, insbesondere Methyl-, Ethyl-, Propyl-, n-Butyl-Hexylacrylat sowie Polymerisate, die aus wenigstens 70 Gew.-% $C_1—C_{12}$-Alkylacrylatpolymerisaten aufgebaut sind, verstanden; als Comonomere für die $C_1—C_{12}$-Alkylacrylate können z. B. Styrol, Acrylnitril, Alkylmethacrylat, Butadien, Isopren, Chloropren, Vinylester, Vinylether, Vinylcarbonsäure, Allylalkohol, Allylester, -ether fungieren; die Acrylatkautschuke können ganz oder partiell vernetzt sein, z. B. durch polyfunktionelle Vinyl- bzw. Allylmonomere.

Bevorzugte Acrylatkautschuke sind Emulsionspolymere, die einen Gelgehalt von >60 Gew.-% aufweisen, und die mit polyfunktionellen und/oder pfropfvernetzenden und/oder pfropfaktiven Monomeren vernetzt wurden, z. B. mit Triallyl(iso)cyanurat, Allyl(meth)acrylat, Maleinsäureallylester usw. Solche Acrylatkautschuke sind bekannt (vgl. DE-OS 2 256 301, 2 558 476, DE-AS 2 624 656, Europäisches Patent 0 001 782).

2

0 056 242

Als Kernmaterialien im Sinne der Erfindung sind außerdem Polymerisate und Copolymerisate geeignet, die sich z. B. von folgenden Vinylmonomeren ableiten, und die nicht unbedingt einen Kautschukcharakter aufweisen brauchen: Styrol, 2-Phenylpropen, halogenierte Styrole, (Meth)Acrylnitril, Methacrylsäureester, Acrylsäure oder Methacrylsäure, Vinylacetat, 1-Olefine wie Ethylen, Propylen, Buten, Diene, Alkylacrylate, Maleinsäurederivate, Itaconsäurederivate. Kern/Schalen-Latexpartikel im Sinne der Erfindung sind außerdem Dien- oder Acrylatkautschuke, die im wesentlichen aus identischen Monomeren bestehen, die aber als Kernpolymerisat einen Kautschuk aufweisen, der sich nur in seiner Vernetzungsart, Vernetzungsdichte oder sonstiger Vernetzungsmerkmalen vom kautschukartigen Schalenpolymerisat unterscheidet.

Derartige Kautschukemulsionspolymerisate mit den verschiedenen Kern/Schale-Strukturen sind bekannt.

Das erfindungsgemäße Verfahren kann wie folgt durchgeführt werden:

Zuerst wird ein Kautschuklatex mit Kern/Schalen-Struktur erzeugt. Dann wird diese Emulsion vollständig gebrochen, z. B. mit Elektrolyten (wie Säuren, Basen), mechanische Einwirkung oder Erhitzen. Bevorzugt ist Koagulation mit wäßrigen Lösungen von Säuren und/oder Salzen bei Temperaturen von ca. 30 bis 100° C. Erhalten wird eine heterogene Aufschlämmung von diskreten Polymerpartikeln verschiedener Form und Größe in Wasser. Form und Größe der Partikel kann durch Variation der Fällungsbedingungen beeinflußt werden.

In diese Polymerisataufschlämmung werden nun, vorzugsweise bei Temperaturen von ca. 30—100° C, die oder das Vinylmonomere wie Styrol, Acrylnitril, Alkylmethacrylat, Acrylsäure, Methacrylsäure, Vinylacetat, und gegebenenfalls Regler, Radikalinitiatoren (insbesondere wasserlösliche Persulfate) oder Antioxidantien in die stark bewegte Polymerisataufschlämmung eingebracht und radikalisch polymerisiert; dabei ist der Zusatz von Suspendiermitteln nicht erforderlich bzs. zu vermeiden. Abschließend wird das erfindungsgemäße Polymerisat isoliert, z. B. durch Filtration oder Zentrifugation, und danach getrocknet.

Das erfindungsgemäße Verfahren kann dis-, halb- oder vollkontinuierlich durchgeführt werden.

Die erfindungsgemäßen Polymerisatpulver sind lagerbeständig, rieselfähig und nichtklebend. Sie lassen sich besonders leicht und wirtschaftlich, z. B. durch Schmelzcompoundierung verarbeiten, z. B. zu Elastomeren, Gummi, hochflexiblen Kunststoffen usw.

## Ausführungsbeispiele

### 1. Ausgangslatices

1.1 In einem Reaktor wird unter Rühren folgende Emulsion bei 65° C bis praktisch zum vollständigen Monomerumsatz innerhalb von ca. 22 Std. polymerisiert:

| 100 Gew.-Teile | Butadien |
| 1,8 Gew.-Teile | Na-Salz der disproportionierten Abietinsäure |
| 0,257 Gew.-Teile | Natriumhydrixid |
| 0,3 Gew.-Teile | n-Dodecylmercaptan |
| 1,029 Gew.-Teile | Na-Ethylendiamintetraacetat |
| 0,023 Gew.-Teile | Kaliumpersulfat |
| 760 Gew.-Teile | Wasser |

Es wird ein Latex erhalten, der Polybutadien in einer Konzentration von 35 bis 36 Gew.-% enthält.

1.2 Zur Polymerisation vorgelegt werden:

| 90 Gew.-Teile | Wasser |
| 2,5 Gew.-Teile | Na-Sulfonat von $C_{14}—C_{18}$-Kohlenwasserstoffen |
| 1,8 Gew.-Teile | Acrylnitril |
| 4,8 Gew.-Teile | Styrol |
| 0,9 Gew.-Teile | Methacrylsäuremethylester |
| 0,00025 Gew.-Teile | tert.-Dodecylmercaptan |

Bei einer Reaktionstemperatur von 63—65° C startet man die Polymerisation mit einer Lösung aus:

| 15 Gew.-Teilen | Wasser |
| 0,3 Gew.-Teilen | Kaliumpersulfat |

Innerhalb von 4,5 Std. werden anschließend folgende Lösungen gleichmäßig in den Reaktor zudosiert:

3

Lösung 1:
| 9 Gew.-Teile | Methacrylsäuremethylester |
| 65 Gew.-Teile | Styrol |
| 26 Gew.-Teile | Acrylnitril |
| 0,2 Gew.-Teile | n-Dodecylmercaptan |

Lösung 2:
| 26 Gew.-Teile | Wasser |
| 0,3 Gew.-Teile | Na-Sulfonat von $C_{14}-C_{18}$-Kohlenwasserstoffen |

Anschließend rührt man 4 Std. bei 63°C nach. Es wird ein Latex erhalten, der das Polymerisat in einer Konzentration von 44 Gew.-% enthält.

2. Kautschuklatices, die Kautschukpartikel mit einer Kern/Schalen-Struktur enthalten

2.1 In einem Reaktor wird unter Rühren bei 65°C folgende Mischung vorgelegt:

| 200 Gew.-Teile | Latex 1.1 |
| 5000 Gew.-Teile | Wasser |
| 14 Gew.-Teile | Kaliumpersulfat |
| 0,9124 Gew.-Teile | Triallylcyanurat |
| 399,09 Gew.-Teile | n-Butylacrylat |

Innerhalb von 5 Std. werden bei 63°C folgende Mischungen in den Reaktor getrennt eindosiert:

Mischung A:
| 90 Gew.-Teile | Na-Sulfonat von $C_{14}-C_{18}$-Kohlenwasserstoffen |
| 11 900 Gew.-Teile | Wasser |

Mischung B:
| 23,09 Gew.-Teile | Triallylcyanurat |
| 10 101 Gew.-Teile | n-Butylacrylat |

Anschließend läßt man 3 Std. bei 63°C auspolymerisieren. Die gebildeten Polymerisate besitzen Gelgehalte von >85 Gew.-%, gemessen in Dimethylformamid bei 25°C nach M. Hoffmann u. a. Polymeranalytik I und II, Georg Thieme Verlag, Stuttgart, 1977.
Polymerfeststoff des Latex ca. 37,5 Gew.-%.

2.2 Beispiel 2.1 wird wiederholt, aber anstatt Latex 1.1 werden 175 Gew.-Teile Latex 1.2 eingesetzt.
2.3 Bei 60—68°C innerhalb ca. 110 Std. folgende Emulsion polymerisiert:

| 100 Gew.-Teile | Butadien |
| 20 Gew.-Teile | Latex 1.2 |
| 80 Gew.-Teile | Wasser |
| 1,130 Gew.-Teile | Na-Salz der disproportionierten Abietinsäure |
| 0,055 Gew.-Teile | Na-Salz der Ethylendiamintetraessigsäure |
| 0,137 Gew.-Teile | Natriumhydroxid |
| 0,028 Gew.-Teile | Natriumhydrogencarbonat |
| 0,282 Gew.-Teile | Kaliumpersulfat |

Man erhält einen Kautschuklatex mit einem Polymerfeststoffgehalt von 53—54 Gew.-%.

3. Herstellung einiger erfindungsgemäßer Kautschukpulver

3.1 In einem Reaktor werden bei 70°C vorgelegt:

| 18 800 Gew.-Teile | Wasser |
| 245 Gew.-Teile | Bittersalz ($MgSO_4 \cdot H_2O$) |

Unter Rühren läßt man in 2 Std. folgende Menge Latex in den Reaktor einlaufen:

| 11 200 Gew.-Teile | Latex 2.1 |

Nach Beendigung dieses Zulaufs werden 466 Gew.-Teile Methylmethacrylat in 1 Std. gleichmäßig unter Rühren eindosiert. Dann fügt man unter Rühren 5 Gew.-Teile Kaliumpersulfat hinzu. Anschließend rührt man die Aufschlämmung 3 Std. bei 90° C. Das Polymerisat wird nun isoliert.

3.2 Beispiel 3.1 wird wiederholt, anstatt Latex 2.1 wird der Latex 2.2 eingesetzt.
3.3 Beispiel 3.1 wird wiederholt, anstatt Methylmethacrylat wird eine Mischung aus 130 Gew.-Teilen Acrylnitril und 336 Gew.-Teilen Styrol eingesetzt.
3.4 In einem Reaktor werden bei 70° C vorgelegt:

| 22 166 Gew.-Teile | Wasser |
|---|---|
| 300 Gew.-Teile | Bittersalz |

Unter Rühren läßt man in 2 Std. folgende Menge Latex in den Reaktor einlaufen:

| 7838 Gew.-Teile | Latex 2.3 |
|---|---|

Nach Beendigung dieses Zulaufs werden 466 Gew.-Teile Methylmethacrylat in 1,5 Std. gleichmäßig unter Rühren eindosiert. Dann fügt man 6 Gew.-Teile Kaliumpersulfat hinzu. Anschließend rührt man die Aufschlämmung 3 Std. bei 90° C. Das Polymerisat wird nun isoliert.

### 4. Vergleichbare Pulver- und Handhabbarkeitscharakterisierung der Produkte 3

Die Polymerisataufschlämmungen werden mittels einer Laborschleuder, deren Schleuderkammer einen Innendurchmesser von 30 cm aufweist und die mit 1500 U/min arbeitet, bei Raumtemperatur aufgearbeitet.
Dabei wird folgendermaßen vorgegangen:
Die in den obigen Beispielen beschriebenen Polymerisataufschlämmungen werden in solchen Mengen in die Schleuder eingeführt, daß pro Aufarbeitungsgang 1 kg Feststoff, bezogen auf Trockenware, isoliert werden kann; anschließend wird bei laufender Schleuder 20 min mit Wasser derart gewaschen, bis das ablaufende Waschwasser nahezu elektrolytfrei ist. Danach wird 5 min trockengeschleudert. Von diesem trockengeschleuderten Material wird dann der Wassergehalt bestimmt. Danach trocknet man die feuchten Polymeren bei 70° C 24 Std. lang auf Blechen in Heißlufttrockenschränken.
Die so anfallenden Polymerisate werden in bezug auf Pulverigkeit und Zusammenkleben charakterisiert.

| Polymer | Restwassergehalt nach Trockenschleudern (Gew.-%) | Charakterisierung der trockenen Polymere |
|---|---|---|
| 3.1 | 34 | rieselfähiges Pulver, das bei Lagerung nicht zusammenbackt |
| 3.2 | 29 | desgl. |
| 3.3 | 32 | desgl. |
| 3.4 | 28 | desgl. |

Wie aus der Tabelle zu ersehen ist, zeichnen sich die erfindungsgemäßen Polymere 3 nicht nur durch vorteilhafte Restwassergehalte aus, sondern insbesondere durch besondere Pulvereigenschaften, so daß die technologische Weiterverwendbarkeit der Kautschuke wesentlich günstiger ist.

## Patentansprüche

1. Verfahren zur Herstellung von rieselfähigen Kautschukpulvern mit Teilchen eines mittleren Durchmessers von 0,01 bis 10 mm, dadurch gekennzeichnet, daß man einen Latex eines Kautschuks, dessen Latexpartikel aus einem Kernpolymerisat und einem Schalenpolymerisat aufgebaut sind, wobei sich Kern und Schale in ihrem chemischen Aufbau voneinander unterscheiden, und wobei wenigstens das Schalenpolymerisat ein Dien- oder Acrylatkautschuk mit Glasübergangstemperaturen unter 0°C bedeutet, unter Ausbildung einer wäßrigen Aufschlämmung des Kautschuks vollständig bricht, danach 2—20 Gew.-%, bezogen auf den Kautschuk, eines oder mehrerer Vinylmonomerer, die Polymerisate mit Glasübergangstemperaturen über 25°C bilden, in die Aufschlämmung einbringt und das oder die Monomeren, gegebenenfalls nach Zugabe eines radikalbildenden Katalysators, polymerisiert.

2. Verfahren nach Anspruch 1, dadurch gekennzeichnet, daß die Dien- oder Acrylatkautschuke Homo- und Copolymerisate des Butadiens, Isoprens oder Chloroprens bzw. Homo- oder Copolymerisate von Alkylacrylaten mit Kautschukeigenschaften bedeuten.

3. Verfahren nach Anspruch 1, dadurch gekennzeichnet, daß man als Vinylmonomere Styrol, Acrylnitril, Alkylmethacrylat oder Mischungen davon verwendet.

4. Rieselfähige Kautschukpulver aus Teilchen mit einem mittleren Durchmesser von 0,01—10 mm, die eine aufpolymerisierte Hülle aus dem Polymerisat oder Copolymerisat eines oder mehrerer Vinylmonomerer, die Polymerisate mit Glasübergangstemperaturen über 25°C bilden, in einer Menge von 2—20 Gew.-%, bezogen auf den Kautschuk, enthalten, dadurch gekennzeichnet, daß der Kautschuk ein Latexpolymerisat darstellt, dessen Latexpartikel aus einem Kernpolymerisat und einem Schalenpolymerisat aufgebaut sind, wobei sich Kern und Schale in ihrem chemischen Aufbau unterscheiden, und wobei wenigstens das Schalenpolymerisat ein Dien- oder Acrylatkautschuk mit Glasübergangstemperaturen unter 0°C bedeutet.

## Claims

1. Process for the preparation of pourable rubber powders comprising particles having an average diameter of 0.01 to 10 mm, characterised in that a latex of a rubber, the latex particles of which are composed of a core polymer and a sheath polymer, the core and sheath differing from each other in their chemical composition and at least the sheath polymer being a diene or acrylate rubber having glass transition temperatures of below 0°C, is completely broken with the formation of an aqueous suspension of the rubber, after which 2—20% by weight, based on the rubber, of one or more vinyl monomers which form polymers having glass transition temperatures of above 25°C are introduced into the suspension and the monomer(s) is/are polymerised, optionally after adding a radical-forming catalyst.

2. Process according to Claim 1, characterised in that the diene or acrylate rubbers are homo- and copolymers of butadiene, isoprene or chloroprene or homo- or copolymers of alkyl acrylates having rubber properties.

3. Process according to Claim 1, characterised in that styrene, acrylonitrile, alkyl methacrylate or mixtures thereof are used as the vinyl monomers.

4. Pourable rubber powders comprising particles having an average diameter of 0.01 to 10 mm which contain, polymerised thereon, a shell of the polymer or copolymer of one or more vinyl monomers, which form polymers having glass transition temperatures of above 25°C, in a quantity of 2—20% by weight, based on the rubber, characterised in that the rubber is a latex polymer, the latex particles of which are composed of a core polymer and a sheath polymer, the core and sheath differing in their chemical composition, and at least the sheath polymer being a diene or acrylate rubber having glass transition temperatures of below 0°C.

## Revendications

1. Procédé pour la fabrication de poudres de caoutchouc à écoulement libre d'un diamètre moyen de particules de 0,01 à 10 mm, caractérisé en ce que l'on casse complètement un latex d'un caoutchouc dont les particules de latex sont constituées d'un polymère de noyau et d'un polymère d'enveloppe, le noyau et l'enveloppe étant différents l'un de l'autre par leur structure chimique et le polymère d'enveloppe au moins étant un caoutchouc de diène ou d'acrylate ayant des températures de transition vitreuse inférieures à 0°C, avec formation d'une suspension aqueuse du caoutchouc, on ajoute ensuite dans la suspension 2 à 20% en poids, par rapport au caoutchouc, d'un ou plusieurs monomères vinyliques qui forment des polymères ayant des températures de transition vitreuse de plus de 25°C et on polymérise le ou les monomères, éventuellement après addition d'un catalyseur générateur de radicaux.

2. Procédé selon la revendication 1, caractérisé en ce que les caoutchoucs de diènes ou d'acrylates sont des homo- et copolymères du butadiène, de l'isoprène ou du chloroprène ou des homo- ou copolymères d'acrylates d'alkyle ayant des propriétés de caoutchouc.

3. Procédé selon la revendication 1, caractérisé en ce que l'on utilise comme monomères vinyliques le styrène, l'acrylonitrile, les méthacrylates d'alkyle ou leurs mélanges.

4. Poudres de caoutchouc à écoulement libre en particules d'un diamètre moyen de 0,01—10 mm, qui contiennent une enveloppe polymérisée d'un polymère ou copolymère d'un ou plusieurs monomères vinyliques qui forment des polymères ayant des températures de transition vitreuse de plus de

**0 056 242**

25°C, en quantité de 2 à 20% en poids, par rapport au caoutchouc, caractérisées en ce que le caoutchouc est un polymère de latex dont les particules de latex sont constituées d'un polymère de noyau et d'un polymère d'enveloppe, le noyau et l'enveloppe étant différents par leur structure chimique et le polymère d'enveloppe au moins étant un caoutchouc de diène ou d'acrylate ayant des températures de transition vitreuse de moins de 0°C.

7